# EUROPEAN PATENT APPLICATION

(11) **EP 4 775 499 A1**
(43) Date of publication of application: **15.07.2026**
(21) Application number: 25223210.3
(22) Date of filing: 15.12.2025
(51) Int. Cl.: B65B 9/20, B29C 65/00, B65B 9/207, B65B 51/14, B65B 51/30, B65B 59/04, B65B 65/00, B65B 55/10

(54) **PACKAGE FORMING APPARATUS AND PACKAGING MACHINE FOR FORMING PACKAGES**

(30) Priority: 08.01.2025 IT 202500000144
(71) Applicant: Tetra Laval Holdings & Finance S.A., 1009 Pully (CH)
(72) Inventor: BARBI, Massimiliano, 41123 Modena (IT); PRADELLI, Massimo, 41123 Modena (IT)
(74) Representative: Tetra Pak Patent Attorneys

(57) **Abstract**

There is described a package forming apparatus (1) comprising a first operative unit (4) and a second operative unit (5) each of which comprises a plurality of operative devices (7) and a conveyor device (8) configured to advance the plurality of operative devices (7). Each operative device (7) comprises a cart (10) moveably coupled to the conveyor device (8) and an operative group (11). Each conveyor device (8) comprises a control unit (12) configured to advance the carts (10) along an advancement path (Q) and a braking device (18) configured to interact with a respective braking pad (19) of each operative device (7) and configured to allow and to impede advancement of the operative devices (7). Each braking device (18) comprises a first plate assembly (20) and a second plate assembly (21) spaced apart from one another, forming a space (22) therebetween and being movable between a release position and a clamping position. The actuator assembly (23) comprises at least one actuator (30) connected to the first plate assembly (20) and configured to induce a movement of the first plate assembly (20). The at least one actuator (30) comprises a piston (31) and a ball joint assembly (35) connected to the piston (31) and the first plate assembly (20).

## Description

### TECHNICAL FIELD

The present invention relates to a package forming apparatus for forming packages, preferentially sealed packages, for pourable products, preferentially pourable food products.

Advantageously, the present invention also relates to a packaging machine comprising a package forming apparatus for forming packages, preferentially sealed packages, for pourable products, preferentially pourable food products.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber in which the web of packaging material is maintained and advanced. During advancement of the web of packaging material through the isolation chamber, the web of packaging material is formed into a tube and longitudinally sealed.

For completing the forming operations, the tube is filled with a pourable product, e.g. a pourable food product, and is transversally sealed and subsequently cut along equally spaced transversal cross sections within a package forming apparatus of the packaging machine during advancement along an advancing direction.

Pillow packages are so obtained, each pillow package having a longitudinal sealing band, a top transversal sealing band and a bottom transversal sealing band.

A typical packaging machine comprises a conveying device for advancing the web of packaging material along a web advancement path and the tube formed from the web of packaging material along a tube advancement path, the sterilization apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus configured to form, transversally seal and cut individual packages from the tube.

One kind of packaging forming apparatus as e.g. described in EP-A-3254978, comprises a plurality of operative devices, each one having a respective cart and a respective operative group carried by and laterally protruding from the respective cart. The packaging machine also includes two conveying devices spaced apparat from one another, each moveably carrying a plurality of respective carts and being configured to advance the respective carts along a respective endless advancement path so as to also advance the respective operative groups along an endless path. During advancement of each cart along a respective operative portion of the respective endless advancement path the respective operative group is configured to manipulate the tube so as to form the packages from the tube.

Moreover, each conveying device comprises a support structure moveably carrying the carts. The support structure comprises a first guide and a second guide. Each cart comprises a first coupling assembly and a second coupling assembly connected to respective lateral end portions of the respective cart. Each first coupling assembly is coupled to the first guide and each second coupling assembly is coupled to the second guide thereby stabilizing the advancement of the operative devices.

Additionally, each conveying device comprises a braking device for allowing or impeding movement of the carts. Each cart comprises a braking pad protruding into a space defined by two spaced apart plates when advancing along linear portions of the respective advancement path. In the specific, the conveying devices as disclosed in EP-A-3254978 comprise two pairs of two spaced apart linear plates, one linear plate of each pair is fixed and the other one is movable towards the respective fixed linear plate for clamping the braking pads present within the respective space between the linear plates.

Additionally, the linear plates are arranged such that the carts are interposed between the linear plates and the respective operative group.

Even though the known package forming apparatus and/or packaging machines work satisfactorily well, a desire is felt in the sector to further improve the known package forming apparatus and/or packaging machines.

### DISCLOSURE OF INVENTION

It is therefore an object of the present invention to provide an improved package forming apparatus for forming packages.

According to the present invention, there is provided a package forming apparatus as claimed in claim 1.

Preferred non-limiting embodiments of the package forming apparatus are claimed in the claims being directly and indirectly dependent on claim 1.

According to the present invention, there is provided a packaging machine as claimed in claim 15.

### BRIEF DESCRIPTION OF THE DRAWINGS

A non-limiting embodiment of the present invention will be described by way of example with reference to the accompanying drawings, in which:
Figure 1 is a schematic view of a package forming apparatus according to the present invention, with parts removed for clarity;
Figure 2 is a perspective view of a portion of the package forming apparatus of Figure 1, with parts removed for clarity;
Figure 3 is a further perspective view of a detail of the portion of the package forming apparatus of Figure 2, with parts removed for clarity;
Figure 4 is an enlarged view of the detail of Figure 3, with parts removed for clarity;
Figure 5 is a section view of a detail of the portion of the package forming apparatus of Figures 2, 3 and 4, with parts removed for clarity;
Figure 6 is a perspective view of another detail of the portion of the package forming apparatus of Figures 2, 3 and 4, with parts removed for clarity;
Figure 7 is a section view of another portion of the package forming apparatus of Figure 1, with parts removed for clarity; and
Figure 8 is a perspective view of a further detail of the portion of the package forming apparatus of Figures 2, 3 and 4, with parts removed for clarity.

### BEST MODES FOR CARRYING OUT THE INVENTION

Number 1 indicates as a whole a package forming apparatus for producing packages 2, preferentially sealed packages, of a pourable product, in particular a pourable food product, such as milk, milk drinks, yoghurt, yoghurt drinks, fruit juice, wine, tomato sauce, emulsions, beverages containing pulp, salt, sugar, etc., from a tube 3, preferentially advancing along a tube advancement path P and preferentially being filled with the pourable product.

Preferentially, package forming apparatus 1 may be part of a packaging machine configured to produce packages 2 of the pourable product.

In more detail, the packaging machine may be configured to produce packages 2 from a multilayer packaging material.

Preferentially, the multilayer packaging material may have heat-seal properties (i.e. portions of the multilayer packaging material can be sealed to one another).

In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas- and light-barrier material, e.g. aluminum foil or ethylene vinyl alcohol (EVOH) film, preferentially being arranged between one of the layers of heat-seal plastic material and the layer of fibrous material.

Preferentially, the packaging material may also comprise a further layer of heat-seal plastic material being interposed between the layer of gas- and light-barrier material and the layer of fibrous material.

In further detail, the multilayer packaging material may be provided in the form of a web of packaging material.

Furthermore, the packaging machine may be configured to produce packages 2 by forming tube 3 from the web of packaging material, longitudinally sealing tube 3, filling tube 3 with the pourable product and by operating package forming apparatus 1 for at least partially shaping tube 3, transversally sealing, and preferentially transversally cutting tube 3.

In more detail, the packaging machine may comprise a tube forming apparatus configured to form and longitudinally seal tube 3 and a filling apparatus configured to fill tube 3 with the pourable product.

Preferentially, tube 3 may extend along a central axis.

Moreover, the tube forming apparatus may also comprise:
- a conveying unit configured to advance the web of packaging material along a web advancement path, preferentially to a tube forming station, at which, in use, the web of packaging material is formed into tube 3, and configured to advance tube 3 along tube advancement path P; and
- a tube forming and sealing device configured to form tube 3 from the, in use, advancing web of packaging material and to longitudinally seal tube 3.

In further detail, the packaging machine may also comprise an isolation chamber, preferentially delimiting an inner sterile environment from an outer environment. Preferentially, tube forming and sealing device may be at least partially arranged within the isolation chamber, in particular within the inner environment, and being configured to fold and longitudinally seal tube 3 within the isolation chamber, in particular within the inner environment.

Moreover, the packaging machine may also comprise a sterilization unit configured to sterilize the, in use, advancing web of packaging material, preferentially the sterilization unit being arranged upstream of the tube forming apparatus.

Preferentially, package forming apparatus 1 may be arranged downstream of the tube forming apparatus and may be configured to receive tube 3 from the tube forming apparatus.

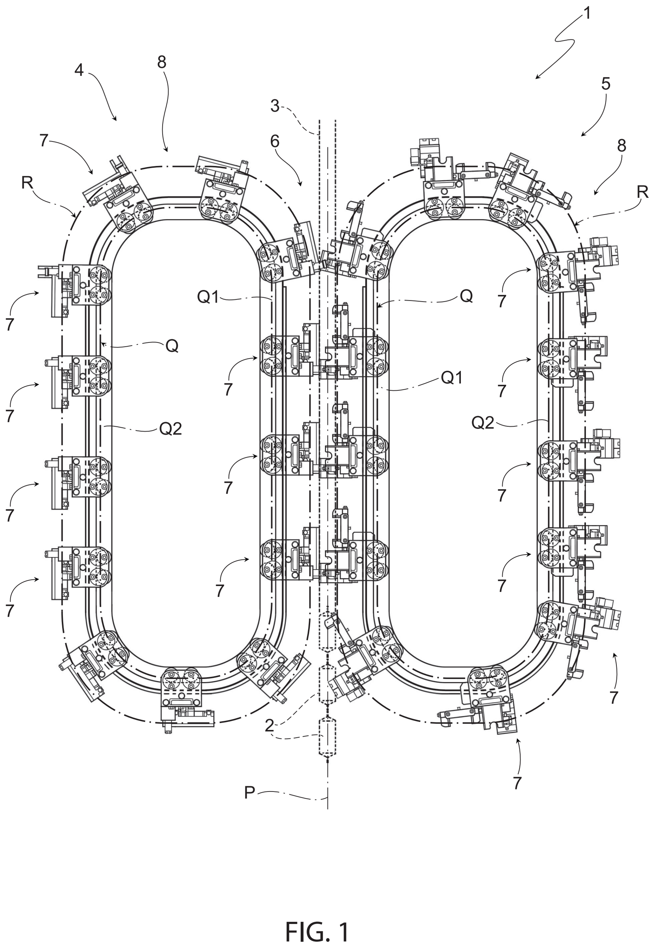

In further detail and with particular reference to Figure 1, package forming apparatus 1 may be configured to manipulate tube 3 being formed from the web of packaging material.

Package forming apparatus 1 comprises a first operative unit 4 and a second operative unit 5 spaced apart from one another and defining an advancement space 6 within which, in use, tube 3 advances.

Preferentially, first operative unit 4 and second operative unit 5 are configured to cooperate with one another so as to manipulate tube 3 for forming packages 2 from the, in use, advancing tube 3.

In particular, first operative unit 4 and second operative unit 5 may be spaced apart from one another along a direction transversal, preferentially perpendicular, to tube advancement path P.

In more detail, each one of first operative unit 4 and second operative unit 5 comprises:
- a plurality of respective operative devices 7, each one configured to manipulate in collaboration with another operative device 7 tube 3 for forming packages 2 from tube 3; and
- a respective conveyor device 8 configured to advance the respective plurality of operative devices 7.

More specifically, each operative device 7 of first operative unit 4 is configured to cooperate with a respective operative device 7 of second operative unit 5 for manipulating, preferentially at least partially shaping and/or transversally sealing and/or transversally cutting tube 3 for forming packages 2 from tube 3.

Even more specifically, each operative device 7 of first operative unit 4 and the respective operative device 7 of second operative unit 5 may form a respective pair of operative devices 7 configured to cooperate with one another for manipulating tube 3.

In the following reference is made to first operative unit 4. It must, however, be understood that first operative unit 4 and second operative unit 5 are similar to one another and, therefore, any feature of first operative unit 4 is also reproduced by second operative unit 5 if not stated otherwise. Additionally, any difference between first operative unit 4 and second operative unit 5 may be specifically highlighted.

Advantageously, each conveyor device 8 may be configured to interact with the respective operative devices 7 by means of a locally controlled electromagnetic field, preferentially so as to advance operative devices 7 along a respective endless path.

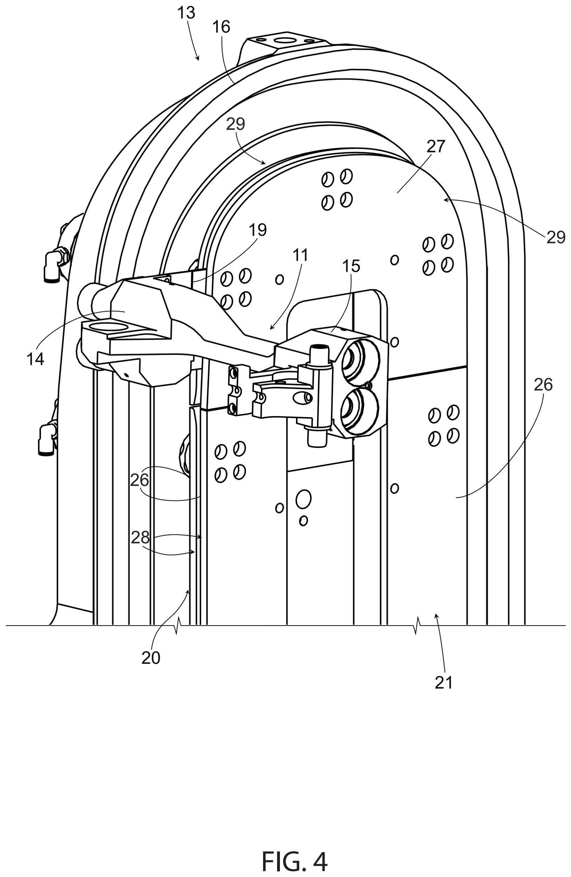

With particular reference to Figures 1, 3, and 4, each operative device 7 comprises a cart 10 moveably coupled to the respective conveyor device 8 and an operative group 11 connected to and being laterally spaced apart from the respective cart 10 such that the respective operative group 11 is adapted (able) to move within advancement space 6. In other words, operative groups 11 are spaced apart from the respective cart 10 so that, in use, operative groups 11 can move within advancement space 6 for interacting with tube 3, while carts 10 never move within advancement space 6.

In further detail, each conveyor device 8 comprises a control unit 12 configured to advance, preferentially to selectively advance, the respective carts 10 along an (cart) advancement path Q. Additionally, by advancement of carts 10 along advancement path Q, the respective operative groups 11 advance along an (operative group) advancement path R. Preferentially, advancement path R may be spaced apart from, and preferentially parallel to, advancement path Q.

Preferentially, each control unit 12 may be configured to advance each one of the respective carts 10 independently from the other respective carts 10. In particular, each control unit 12 may be configured to accelerate and decelerate each one of the respective carts 10 independently from the other respective carts 10.

According to some preferred non-limiting embodiments, each advancement path Q, and preferentially also the respective advancement path R, may be endless and/or annular.

Each conveying device 8 may also comprise a support structure 13 spaced apart from the respective control unit 12 and moveably supporting a coupling portion 14 of the respective operative devices 7.

Additionally, each operative device 7 also comprises an auxiliary coupling portion 15 moveably supported by the respective control unit 12. In particular, auxiliary coupling portion 15 is in contact with the respective cart 10. Additionally, each auxiliary coupling portion 15 is opposite to the respective coupling portion 14.

In particular, it should be noted that each operative group 11 advances along advancement path R due to advancement of the respective cart 10 along advancement path Q and is maintained in position by the respective support structure 13. In other words, each support structure 13 guarantees that operative groups 11 are not subject to undesired movements (e.g. deflections) so that each operative group 11 remains in its desired and/or nominal position to correctly manipulate tube 3.

In more detail, each support structure 13 comprises a respective first guide 16, in particular having an annular shape, moveably supporting the respective coupling portions 14 of the respective operative groups 11.

Additionally, each control unit 12 comprises a respective second guide 17, in particular having an annular shape, moveably supporting the respective auxiliary coupling portions 15 of the respective operative groups 11.

Each first guide 16 and the respective second guide 17 are spaced apart from one another, preferentially along a direction transversal, more preferentially perpendicular, to tube advancement path P.

Advantageously, each first guide 16 and the respective second guide 17 may be parallel to one another.

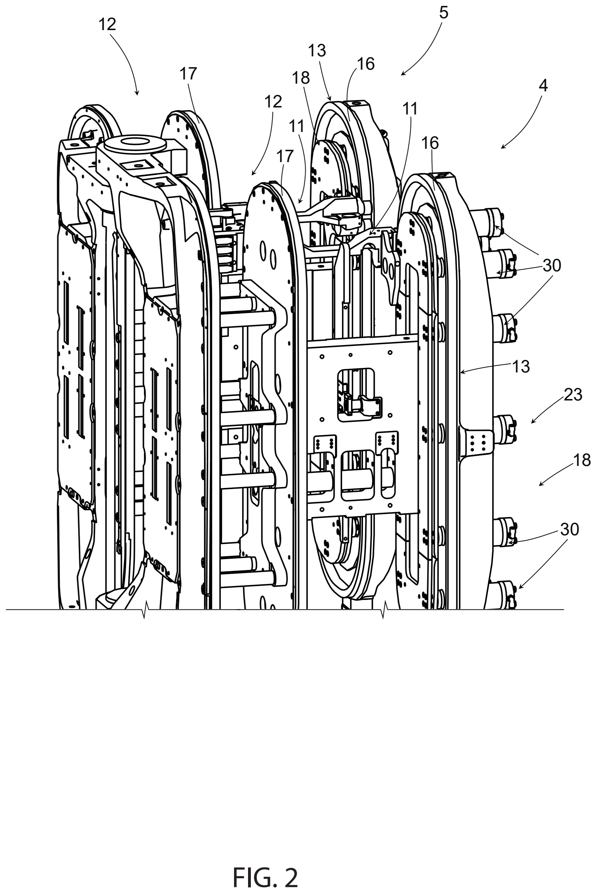

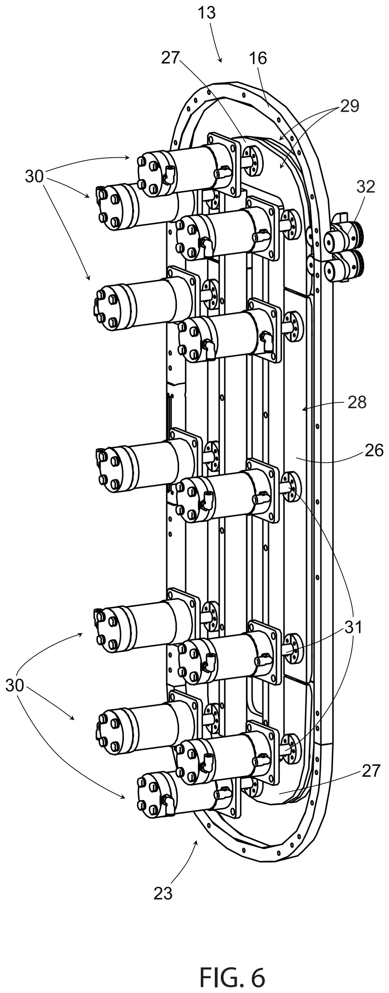

With particular reference to Figures 2 to 6, each conveying device 8 also comprises a braking device 18 configured to interact with a respective braking pad 19 of each respective operative device 7 and configured to allow and to impede advancement of operative devices 7.

In particular, each braking device 18 is controllable in an active configuration in which braking device 18 impedes advancement of the respective operative devices 7 and in a rest configuration in which braking device 18 allows advancement of the respective operative devices 7.

Advantageously, each braking device 18 is biased in the active configuration. In such way, it is guaranteed that advancement of operative devices 7 is impeded, even in case braking device 18 cannot be powered.

Each braking device 18 comprises a first plate assembly 20 and a second plate assembly 21 spaced apart from one another, in particular along a direction transversal, preferentially perpendicular, to tube advancement path P. Each first plate assembly 20 and the respective second plate assembly 21 form a space 22 between one another. In particular, each first plate assembly 20 and the respective second plate assembly 21 are parallel to one another.

In particular, each space 22 is annularly shaped.

Advantageously, each first plate assembly 20 and the respective second plate assembly 21 are annularly shaped and/or delimit space 22 having an annular shape.

In this way, it is possible to impede advancement of operative devices 7 independently of the respective position of operative devices 7 along the respective endless path.

Advantageously, each first plate assembly 20 and the respective second plate assembly 21 are adjacent to the respective support structure 13.

Additionally, braking pad 19 of each operative devices 7 is placed within the respective space 22, in particular independently of the respective position of the respective operative device 7 along the respective endless path.

Each braking device 18 comprises an actuator assembly 23 configured to move each first plate assembly 20 and the respective second plate assembly 21 with respect to one another between a release position in which the respective braking pad 19 can freely move within the respective space 22 and a clamping position in which the respective braking pad 19 is clamped between the respective first plate assembly 20 and the respective second plate assembly 21.

In particular, the respective braking device 18 is in the active configuration and the rest configuration when the respective first plate assembly 20 and the respective second plate assembly 21 are, respectively, in the respective clamping position and the respective release position.

In particular, each first plate assembly 20 and the respective second plate assembly 21 are biased in the respective clamping position. This has the advantage that if, in use, the respective actuator assembly 23 is deactivated and/or powered off, operative device 7 cannot advance.

Moreover, each actuation assembly 23 is activated for moving first plate assembly 20 and the respective second plate assembly 21 in the release position.

Advantageously, each second plate assembly 21 is fixed in space (not movable) and the relative movement between first plate assembly 20 and second plate assembly 21 is achieved by moving the first plate assembly 20.

Each braking pad 19 is connected to and protrudes from the respective operative group 11 into the respective space 22.

In particular, each braking pad 19 comprises and/or consists of a sheet, e.g. a metal sheet.

In further detail, each first plate assembly 20 and the respective second plate assembly 21 are interposed between the respective support structure 13, in particular the respective first guide 16, and the respective control unit 12, in particular the respective second guide 17.

Advantageously, each first plate assembly 20 and the respective second plate assembly 21 comprises a plurality of respective linear plates 26 and a plurality of respective curved plates 27 being arranged such to define two spaced apart linear sections 28 (of the respective first plate assembly 20 or the respective second plate assembly 21) and two spaced apart curved sections 29 (of the respective first plate assembly 20 or the respective second plate assembly 21).

In particular, linear plates 26 and the respective curved plates 27 are arranged such to define an annular shape.

Moreover, the two linear sections 28 are (substantially) parallel to one another and are connected to the two curved section 29.

Advantageously, each linear section 28 of the respective first plate assembly 20 faces one respective linear section 28 of the respective second plate assembly 21 and each curved section 29 of the respective first plate assembly 20 faces one respective curved section 29 of the respective second plate assembly 21.

According to the example shown, each first plate assembly 20 and each second plate assembly 21 comprises two linear plates 26 and two curved plates 27.

In particular, linear plates 26 and curved plates 27 of first plate assembly 20 are movable and are operatively coupled to the respective actuator assembly 23. The respective actuator assembly 23 is configured to move linear plates 26 and curved plates 27 of first plate assembly 20 towards an and away from linear plates 26 and curved plates 27 of second plate assembly 21 so as to move first plate assembly 20 and second plate assembly 21 between the clamping position and the release position.

In particular, linear plates 26 and curved plates 27 of second plate assembly 21 are fixed in space (not movable).

With particular reference to Figures 2, 3, 5 and 6, each actuator assembly 23 comprises at least one actuator 30, preferentially a plurality of actuators 30, configured to induce a relative movement between first plate assembly 20 and second plate assembly 21.

More specifically, the plurality of actuators 30 is connected to first plate assembly 20, in particular to the respective linear plates 26 and the respective curved plates 27 of the respective first plate assembly 20.

More specifically, the plurality of actuators 30 is configured to move the respective linear plates 26 and the respective curved plates 27 of first plate assembly 20 towards and away from the respective linear plates 26 and the respective curved plates 27 of the respective second plate assembly 21 and to move the respective first plate assembly 20 and the respective second plate assembly 21 between the respective release position and the respective clamping position.

Advantageously, more than one actuator 30 is connected to each linear section 28 and to each curved section 29 and such that the respective actuators 30 are spaced apart from one another for interacting with different portions of the respective linear section 28 and the respective curved section 29.

Advantageously, at least three or exactly three actuators 30 are connected to each linear section 28 and to each curved section 29.

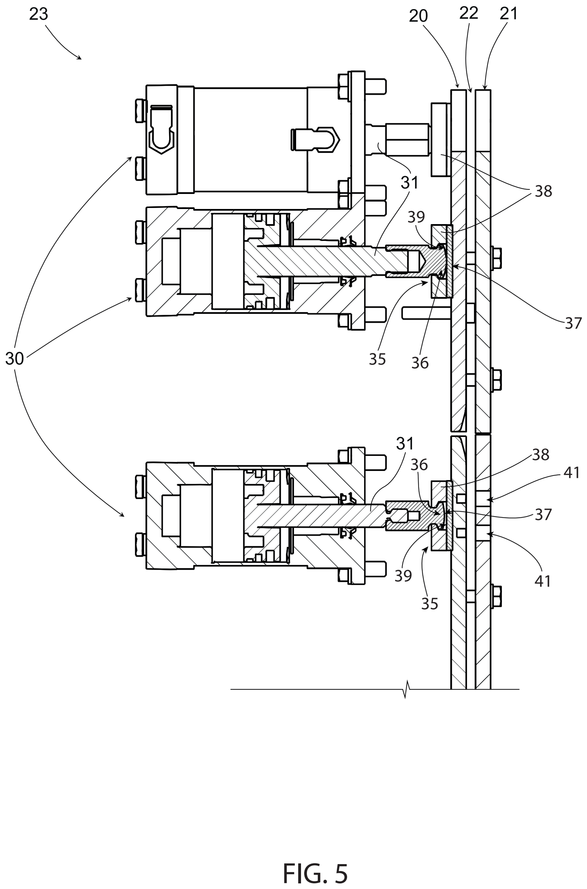

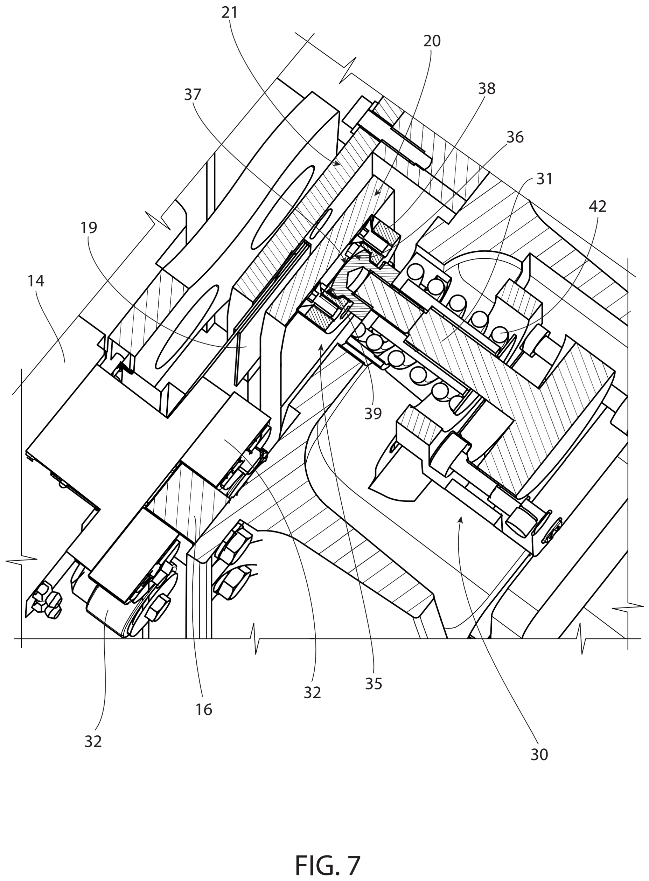

With particular reference to Figures 5 and 7, each actuator 30 comprises a piston 31, in particular a linearly movable piston 31, and a ball joint assembly 35 connected to piston 31 and first plate assembly 20. In particular, each ball joint assembly 35 couples the respective piston 31 to first plate assembly 20 such that a (linear) movement of the respective piston 31 results in application of a force at a (locally restricted) portion of first plate assembly 20.

In more detail, each ball joint assembly 35 is connected to the respective linear plate 26 or the respective curved plate 27.

In further detail, each ball joint assembly 35 comprises a coupling element 36 fixed to the respective piston 31.

More specifically, each coupling element 36 comprises a curved interaction surface 37. In particular, curved interaction surface 37 is opposed to an end portion of coupling element 36 connected to the respective piston 31.

Additionally, each ball joint assembly 35 also comprises a housing socket 38 mounted to first plate assembly 20, in particular the respective linear plate 26 or the respective curved plate 27.

In particular, each coupling element 36 is placed within housing socket 38.

More specifically, each housing socket 38 comprises an engagement surface 39 and the respective interaction surface 37 engages engagement surface 39.

By having ball joint assembly 35 it is possible to exert the desired forces on braking pads 19 independently on the distribution of braking pads 19 within space 22.

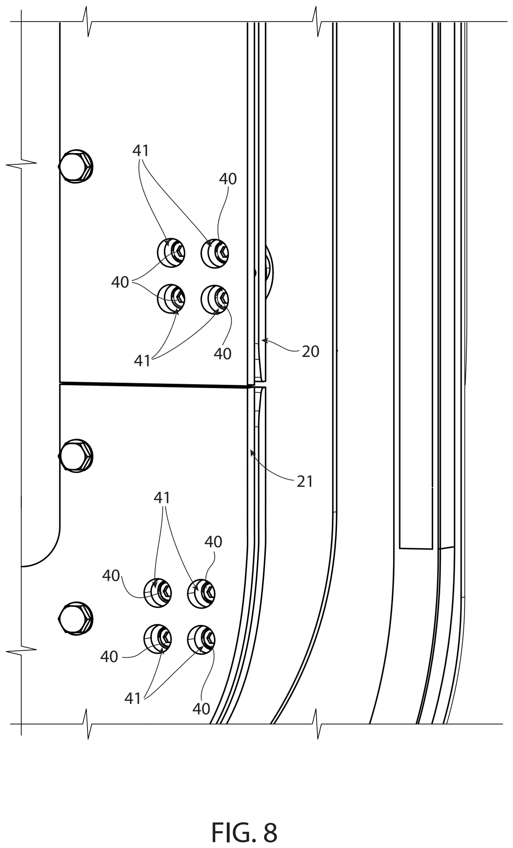

With particular reference to Figure 8, each housing socket 38 is fixed to first plate assembly 20, in particular the respective linear plate 26 or the respective curved plate 27, by means of a plurality of fixing elements 40 such as screws, bolts or the like. In particular, fixing elements 40 are arranged such that releasing of fixing elements 40 from and fastening of fixing elements 40 to housing sockets 38 require movement of fixing elements 40, respectively, towards and away from first plate assembly 21.

Moreover, first plate assembly 20 comprises a plurality of first through-holes, each first through-hole being configured to receive one respective fixing element 40.

Additionally, second plate assembly 21 comprises a plurality of second through-holes 41, each second through-hole 41 being aligned with one respective first through-hole for allowing access to the respective fixing element 41. In this way, each housing socket 38 can be connected to and disconnected from first plate assembly 20 by fastening or releasing the respective fixing element 41 by means of a tool received within the respective second through-hole 41.

In this way, one obtains an easy way of mounting and dismounting actuators 30 to and from first plate assembly 20.

In further detail, each piston 31 is movable between an extracted position and a retracted position. Advantageously, pistons 31 move between the extracted position and the retracted position for moving the respective first plate assembly 20 and the respective second plates assembly 21 between the respective clamping position and the respective release position.

Moreover, pistons 31 are biased in the extracted position, in particular by means of an elastic element 42 such as a spring.

By biasing pistons 31 in the extracted positions, first plate assembly 20 and second plate assembly 21 are biased in the clamping position.

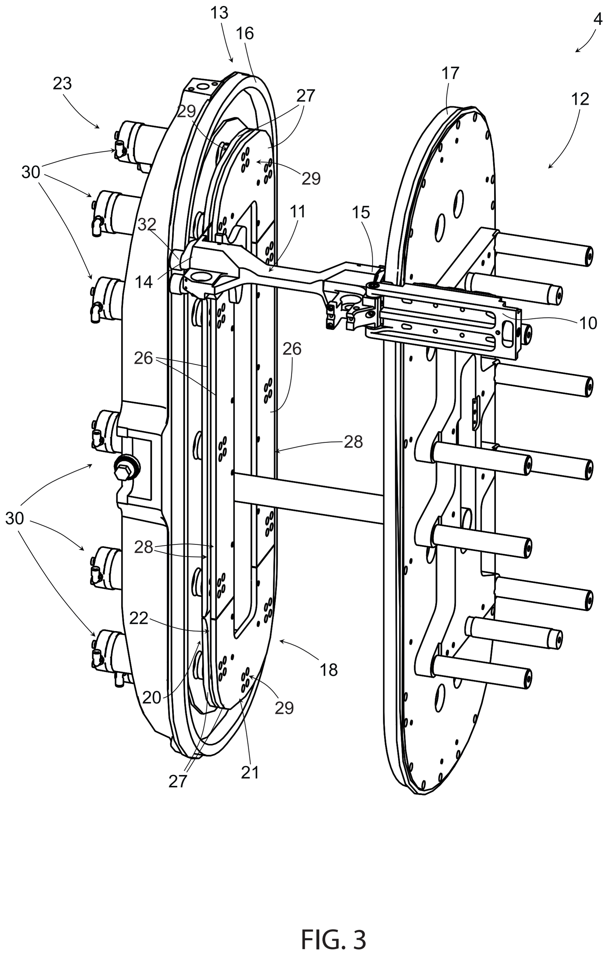

With particular reference to Figures 3, 6 and 7, each operative group 11 comprises a first coupling assembly 32 coupled to and configured to move along the respective first guide 16 and a second coupling assembly coupled to and configured to move along the respective second guide 17.

According to some preferred non-limiting embodiments, each first coupling assembly 32 and each second coupling assembly may comprise at least one pair of rolling elements, preferentially at least two pairs of rolling elements.

The rolling elements may e.g. be rollers rotatable about respective rotation axes.

Moreover, the respective rolling elements of each pair of rolling elements interposes the respective first guide 16 or the respective second guide 17 between one another and engages the respective first guide 16 or the respective second guide 17 from opposite sides thereof.

Advantageously, each operative group 11 may be configured to selectively move between an operative configuration in which operative group 11 is configured to manipulate tube 3 and a rest configuration in which operative group 11 is detached from tube 3.

In particular, each operative group 11 of first operative unit 4 and the respective operative group 11 of second operative unit 5 may be, in use, simultaneously controlled in the respective operative configuration and the respective rest configuration.

More specifically, each operative group 11 may comprise:
- a half-shell configured to at least partially shape tube 3 with the respective operative group 11 being controlled in the respective operative configuration; and/or
- one of a sealing element or a counter-sealing element, configured to transversally seal tube 3 between adjacent packages 2 with the respective operative group 11 being controlled in the operative configuration.

According to some possible embodiment, each operative group 11 of first operative unit 4 may comprise a respective counter-sealing element and each operative group 11 of second operative unit 5 may comprise a respective sealing element.

It should be further noted that each operative group 11 having a respective sealing element is configured to cooperate with a respective operative group 11 having a respective counter-sealing element. In this way, each sealing element and the respective counter-sealing element are configured to transversally flat-lay tube 3 and to transversally seal tube 3 in cooperation with one another and with the respective operative groups 11 being controlled in the respective operative configuration.

At least some operative groups 11 may also comprise a cutting element configured to transversally cut tube 3, preferentially with the respective operative group 11 being controlled in the respective operative configuration and preferentially after execution of the transversal sealing of tube 3.

Preferentially, each operative group 11 of first operative unit 4 and the respective operative group 11 of second operative unit 5 may comprise together one respective cutting element.

Advantageously, each control unit 12 may be configured to advance the respective carts 10 along a respective operative portion Q1 and a respective return portion Q2 of the respective advancement path Q. In this way, also the respective operative group 11 advances along a respective operative portion and a respective return portion of the respective advancement path R.

In use and while the respective cart 10 advances along the respective operative portion Q1 and the respective return portion Q2, each operative group 11 may be configured, respectively, to manipulate tube 3 and to be retracted from tube 3. In other words, each operative group 11 may be configured to manipulate tube 3 when advancing along the respective operative portion of advancement path R.

Additionally, each operative group 11 may be controlled from the respective rest configuration to the respective operative configuration while advancing along the respective operative portion of advancement path R. Preferentially, each operative group 11 may be controlled in the respective rest configuration while advancing along the respective return portion of advancement path R.

In further detail, each operative group 11 may advance along the same direction as tube 3 while advancing along the respective operative portion of advancement path R.

Advantageously, each control unit 12 may be configured to generate an electromagnetic field, preferentially a locally controlled electromagnetic field, for selectively advancing the respective carts 10 along the respective advancement path Q.

More specifically, each control unit 12 may comprise a plurality of induction coils and a powering unit configured to power the induction coils so as to generate locally controlled electromagnetic fields for selectively advancing the respective carts 10.

Advantageously, each cart 10 may comprise at least one magnetic or paramagnetic element configured to interact with the electromagnetic field.

In use, the packaging machine forms packages 2 filled with the pourable product starting from a web of packaging material.

The tube forming apparatus forms tube 3 from the web of packaging material, the filling apparatus fills tube 3 and package forming apparatus 1 manipulates tube 3 so as to obtain packages 2 filled with the pourable product.

In more detail, during operation of package forming apparatus 1 tube 3 advances through advancement space 6 and first operative unit 4 and second operative unit 5 cooperate for obtaining packages 2.

More specifically, each operative device 7 of first operative unit 4 cooperates, preferentially cyclically cooperates, with the respective operative device 7 of second operative unit 5 for forming respective packages 2 from advancing tube 3.

In particular, each control unit 12 controls advancement of the respective carts 10, preferentially independently from one another, along the respective advancement path Q, thereby also controlling advancement of the respective operative groups 11 along the respective advancement path R.

Furthermore, each operative group 11 may be controlled in the respective operative configuration when advancing along the respective operative portion of the respective advancement path R. Moreover, when advancing along the respective return portion of the respective advancement path R each operative group 11 is controlled in the respective rest configuration.

Additionally, advancement of each operative group 11 along the respective return portion of the respective advancement path R allows to bring operative group 11 back to the respective operative portion of the respective advancement path R. In this way, operative groups 11 can cyclically interact with tube 3.

Additionally, each operative group 11 of first operative unit 4 and the respective operative group 11 of second operative unit 5 are configured to manipulate, preferentially to at least partially shape, to transversally seal and to transversally cut, tube 3 in cooperation with one another when advancing along the respective operative portion of the respective advancement path R.

Moreover, each operative group 11 is supported by the respective first guide 16 and in particular also the respective second guide 17 during advancement along the respective advancement path R.

In case of need, advancement of operative devices 7 (i.e. of carts 10 and the respective operative groups 11) can be impeded by operation of the respective braking devices 18.

By modifying the relative position between first plate assemblies 20 and the respective second plate assemblies 21 it is possible to allow or impede advancement of operative devices 7. When first plate assemblies 20 and the respective second plate assemblies 21 are in the respective clamping positions braking pads 19 are clamped between the respective first plate assemblies 20 and the respective second plate assemblies 21 so as to impede advancement of operative devices 7. When first plate assemblies 20 and the respective second plate assemblies 21 are in the respective release positions braking pads 19 are free to move within the respective space 22 so as to allow advancement of operative devices 7.

The advantages of package forming apparatus 1 and/or the packaging machine according to the present invention will be clear from the foregoing description.

In particular, braking devices 18 exert the desired forces on braking pads 19 independently on the specific distribution of braking pads 19 within space 22.

Additionally, braking devices 18 can impede advancement of operative devices 7 independently of the respective positions along the respective endless paths.

Moreover, braking devices 18 can be easily maintained.

Moreover, braking devices 18 must be activated so that operative devices 7 can advance. Hence, when e.g. package forming apparatus 1 is powered off, operative devices 7 cannot move.

Clearly, changes may be made to package forming apparatus 1 and/or the packaging machine as described herein without, however, departing from the scope of protection as defined in the accompanying claims.

## Claims

1. A package forming apparatus (1) for forming packages (2) from a tube (3) filled with a pourable product and advancing, in use, along a tube advancement path (P);
the package forming apparatus (1) comprises:
- a first operative unit (4) and a second operative unit (5) spaced apart from one another and defining an advancement space (6) within which, in use, the tube (3) advances;
wherein each one of the first operative unit (4) and the second operative unit (5) comprises:
- a plurality of respective operative devices (7), each one configured to manipulate in collaboration with another operative device (7) the tube (3) for forming the packages (2); and
- a respective conveyor device (8) configured to advance the respective plurality of operative devices (7);
wherein each operative device (7) comprises a respective cart (10) moveably coupled to the respective conveyor device (8) and a respective operative group (11) connected to and being laterally spaced apart from the respective cart (10) such that the respective operative group (11) is adapted to move within the advancement space (6);
wherein each conveyor device (8) comprises:
- a control unit (12) configured to advance the respective carts (10) along an advancement path (Q);
- a support structure (13) spaced apart from the control unit (12) and moveably carrying at least a coupling portion (14) of the respective operative groups (11); and
- a braking device (18) configured to interact with a respective braking pad (19) of each operative device (7) and configured to allow and to impede advancement of the operative devices (7);
wherein each braking device (18) comprises a first plate assembly (20) and a second plate assembly (21) spaced apart from one another and forming a space (22) between one another;
wherein each braking pad (19) is placed within the respective space (22);
wherein each braking device (18) comprises an actuator assembly (23) configured to move each first plate assembly (20) and the respective second plate assembly (21) with respect to one another and between a release position in which the respective braking pads (19) can freely move within the respective space (22) and a clamping position in which the respective braking pads (19) are clamped between the respective first plate assembly (20) and the respective second plate assembly (21);
wherein the actuator assembly (23) comprises at least one actuator (30) connected to the first plate assembly (20) and configured to induce a movement of the first plate assembly (20);
wherein the at least one actuator (30) comprises a piston (31) and a ball joint assembly (35) connected to the piston (31) and the first plate assembly (20).

2. Package forming apparatus according to claim 1, wherein each ball joint assembly (35) comprises a coupling element (36) having a curved interaction surface (37) and being fixed to the respective piston (31) and a housing socket (38) mounted to the first plate assembly (20);
wherein each curved interaction surface (37) engages a respective engagement surface (39) of the respective housing socket (38).

3. Package forming apparatus according to claim 2, wherein each housing socket (38) is fixed to the first plate assembly (20) by means of a plurality of fixing elements (40) ;
wherein the first plate assembly (20) comprises a plurality of first through-holes, each first through-hole being configured to receive one respective fixing element (40) ;
wherein the second plate assembly (21) comprises a plurality of second through-holes (41), each second through-hole (41) being aligned with one respective first through-hole for allowing access to the respective fixing element (40) for fastening or releasing the respective fixing element (40) .

4. Package forming apparatus according to any one of the preceding claims, wherein each first plate assembly (20) and the respective second plate assembly (21) are designed such that the space (22) has an annular shape.

5. Package forming apparatus according to claim 4, wherein each first plate assembly (20) and the respective second plate assembly (21) comprises a plurality of respective linear plates (26) and a plurality of respective curved plates (27) being arranged such to define two spaced apparat linear sections (28) and two spaced apart curved sections (29).

6. Package forming apparatus according to claim 5, wherein the actuator assembly (23) comprises a plurality of actuators (30) connected to the respective linear plates (26) and the respective curved plates (27) of the first plate assembly (20) for moving the respective linear plates (26) and the respective curved plates (27) of the first plate assembly (20) towards and away from the respective linear plates (26) and the respective curved plates (27) of the second plate assembly (21) so as to move the respective first plate assembly (20) and the respective second plate assembly (21) between the respective release position and the respective clamping position.

7. Package forming apparatus according to claim 6, wherein more than one actuator (30) is connected to each linear section (28) and to each curved section (29) such that the respective actuators (30) are spaced apart from one another for interacting with different portions of the respective linear sections (28) and the respective curved sections (29).

8. Package forming apparatus according to claim 7, wherein at least three or exactly three actuators (30) are connected to each linear section (28) and to each curved section (29).

9. Packaging forming apparatus according to any one of claims 5 to 8, wherein the respective linear plates (28) and the respective curved plates (29) of the second plate assembly (21) are not movable.

10. Packaging forming apparatus according to any one of the preceding claims, wherein each first plate assembly (20) and the respective second plate assembly (21) are interposed between the respective support structure (13) and the respective control unit (12).

11. Packaging forming apparatus according to any one of the preceding claims, wherein the first plate assembly (20) and the respective second plate assembly (21) are biased in the clamping position and the actuation assembly (23) is activated for moving the first plate assembly (20) and the respective second plate assembly (21) in the release position.

12. Packaging forming apparatus according to any one of the preceding claims, wherein each support structure (13) comprises a first guide (16) moveably carrying a coupling portion (14) of each operative group (11) and the respective control unit (12) comprises a second guide (17) moveably carrying an auxiliary coupling portion (15) of the operative group (11) spaced apart from the respective coupling portion (14) ;
wherein each first guide (16) and the respective second guide (17) are spaced apart from one another.

13. Package forming apparatus according to claim 12, wherein each first plate assembly (20) and the respective second plate assembly (21) are interposed between the respective first guide (16) and the respective second guide (17).

14. Package forming apparatus according to any one of the preceding claims, wherein each braking pad (19) protrudes from the respective operative group (11) into the space (22).

15. Packaging machine for forming packages (2) filled with a pourable product comprising a tube forming apparatus configured to form a tube (3) from a web of packaging material and a package forming apparatus (1) according to any one of the preceding claims and being configured to form the packages (2) from the tube (3).

## Amended claims

### Amended claims in accordance with Rule 137(2) EPC.

1. A package forming apparatus (1) for forming packages (2) from a tube (3) filled with a pourable product and advancing, in use, along a tube advancement path (P);
the package forming apparatus (1) comprises:
- a first operative unit (4) and a second operative unit (5) spaced apart from one another and defining an advancement space (6) within which, in use, the tube (3) advances;
wherein each one of the first operative unit (4) and the second operative unit (5) comprises:
- a plurality of respective operative devices (7), each one configured to manipulate in collaboration with another operative device (7) the tube (3) for forming the packages (2); and
- a respective conveyor device (8) configured to advance the respective plurality of operative devices (7);
wherein each operative device (7) comprises a respective cart (10) moveably coupled to the respective conveyor device (8) and a respective operative group (11) connected to and being laterally spaced apart from the respective cart (10) such that the respective operative group (11) is adapted to move within the advancement space (6),
wherein the operative groups (11) are spaced apart from the respective cart (10) so that, in use, the operative groups (11) can move within the advancement space (6) for interacting with the tube (3), while the carts (10) never move within the advancement space (6);
wherein each conveyor device (8) comprises:
- a control unit (12) configured to advance the respective carts (10) along an advancement path (Q);
- a support structure (13) spaced apart from the control unit (12) and moveably carrying at least a coupling portion (14) of the respective operative groups (11); and
- a braking device (18) configured to interact with a respective braking pad (19) of each operative device (7) and configured to allow and to impede advancement of the operative devices (7);
wherein each braking device (18) comprises a first plate assembly (20) and a second plate assembly (21) spaced apart from one another and forming a space (22) between one another;
wherein each braking pad (19) is placed within the respective space (22);
wherein each braking device (18) comprises an actuator assembly (23) configured to move each first plate assembly (20) and the respective second plate assembly (21) with respect to one another and between a release position in which the respective braking pads (19) can freely move within the respective space (22) and a clamping position in which the respective braking pads (19) are clamped between the respective first plate assembly (20) and the respective second plate assembly (21);
wherein the actuator assembly (23) comprises at least one actuator (30) connected to the first plate assembly (20) and configured to induce a movement of the first plate assembly (20);
wherein the at least one actuator (30) comprises a piston (31) wherein each piston (31) is movable between an extracted position and a retracted position, for moving the respective first plate assembly (20) and the respective second plate assembly (21) between the respective clamping position and the respective release position,
wherein each piston (31) is biased in the extracted position by means of an elastic element 42 such as a spring,
**characterized in that** the at least one actuator (30) comprises a ball joint assembly (35) connected to the piston (31) and the first plate assembly (20).

2. Package forming apparatus according to claim 1, wherein each ball joint assembly (35) comprises a coupling element (36) having a curved interaction surface (37) and being fixed to the respective piston (31) and a housing socket (38) mounted to the first plate assembly (20);
wherein each curved interaction surface (37) engages a respective engagement surface (39) of the respective housing socket (38).

3. Package forming apparatus according to claim 2, wherein each housing socket (38) is fixed to the first plate assembly (20) by means of a plurality of fixing elements (40);
wherein the first plate assembly (20) comprises a plurality of first through-holes, each first through-hole being configured to receive one respective fixing element (40);
wherein the second plate assembly (21) comprises a plurality of second through-holes (41), each second through-hole (41) being aligned with one respective first through-hole for allowing access to the respective fixing element (40) for fastening or releasing the respective fixing element (40).

4. Package forming apparatus according to any one of the preceding claims, wherein each first plate assembly (20) and the respective second plate assembly (21) are designed such that the space (22) has an annular shape.

5. Package forming apparatus according to claim 4, wherein each first plate assembly (20) and the respective second plate assembly (21) comprises a plurality of respective linear plates (26) and a plurality of respective curved plates (27) being arranged such to define two spaced apparat linear sections (28) and two spaced apart curved sections (29).

6. Package forming apparatus according to claim 5, wherein the actuator assembly (23) comprises a plurality of actuators (30) connected to the respective linear plates (26) and the respective curved plates (27) of the first plate assembly (20) for moving the respective linear plates (26) and the respective curved plates (27) of the first plate assembly (20) towards and away from the respective linear plates (26) and the respective curved plates (27) of the second plate assembly (21) so as to move the respective first plate assembly (20) and the respective second plate assembly (21) between the respective release position and the respective clamping position.

7. Package forming apparatus according to claim 6, wherein more than one actuator (30) is connected to each linear section (28) and to each curved section (29) such that the respective actuators (30) are spaced apart from one another for interacting with different portions of the respective linear sections (28) and the respective curved sections (29).

8. Package forming apparatus according to claim 7, wherein at least three or exactly three actuators (30) are connected to each linear section (28) and to each curved section (29).

9. Packaging forming apparatus according to any one of claims 5 to 8, wherein the respective linear plates (28) and the respective curved plates (29) of the second plate assembly (21) are not movable.

10. Packaging forming apparatus according to any one of the preceding claims, wherein each first plate assembly (20) and the respective second plate assembly (21) are interposed between the respective support structure (13) and the respective control unit (12).

11. Packaging forming apparatus according to any one of the preceding claims, wherein the first plate assembly (20) and the respective second plate assembly (21) are biased in the clamping position and the actuation assembly (23) is activated for moving the first plate assembly (20) and the respective second plate assembly (21) in the release position.

12. Packaging forming apparatus according to any one of the preceding claims, wherein each support structure (13) comprises a first guide (16) moveably carrying a coupling portion (14) of each operative group (11) and the respective control unit (12) comprises a second guide (17) moveably carrying an auxiliary coupling portion (15) of the operative group (11) spaced apart from the respective coupling portion (14);
wherein each first guide (16) and the respective second guide (17) are spaced apart from one another.

13. Package forming apparatus according to claim 12, wherein each first plate assembly (20) and the respective second plate assembly (21) are interposed between the respective first guide (16) and the respective second guide (17).

14. Package forming apparatus according to any one of the preceding claims, wherein each braking pad (19) protrudes from the respective operative group (11) into the space (22).

15. Packaging machine for forming packages (2) filled with a pourable product comprising a tube forming apparatus configured to form a tube (3) from a web of packaging material and a package forming apparatus (1) according to any one of the preceding claims and being configured to form the packages (2) from the tube (3).
